# EUROPÄISCHE PATENTSCHRIFT

(11) **EP 4 255 110 B1**
(45) Veröffentlichungstag und Bekanntmachung des Hinweises auf die Patenterteilung: **19.08.2026**
(21) Anmeldenummer: 23165312.2
(22) Anmeldetag: 30.03.2023
(51) Int. Cl.: H05B 3/50, B60H 1/22, F24H 3/04, F24H 3/06, F24H 3/08, F24H 9/1863, H05B 3/03

(54) **PTC-HEIZEINRICHTUNG UND ELEKTRISCHE HEIZVORRICHTUNG UMFASSEND EINE SOLCHE**
PTC HEATING DEVICE AND ELECTRIC HEATING DEVICE COMPRISING SAME
DISPOSITIF DE CHAUFFAGE PTC ET DISPOSITIF DE CHAUFFAGE ÉLECTRIQUE COMPRENANT UN TEL DISPOSITIF DE CHAUFFAGE

(30) Priorität: 30.03.2022 DE 102022107554
(43) Veröffentlichungstag der Anmeldung: 04.10.2023
(73) Patentinhaber: Eberspächer catem GmbH & Co. KG, 76863 Herxheim (DE)
(72) Erfinder: Freitag, Rüdiger, 76829 Landau (DE); Nord, Marc, 76756 Bellheim (DE)
(74) Vertreter: Grünecker Patent- und Rechtsanwälte PartG mbB

(56) Entgegenhaltungen:
- EP-A1- 2 190 256
- EP-A1- 2 190 257
- US-B1- 6 178 292

## Beschreibung

Die vorliegende Erfindung betrifft eine PTC-Heizeinrichtung und eine elektrische Heizvorrichtung mit einem Rahmen, der Ein- und Auslassöffnung für ein zu erwärmendes Medium ausbildet und zumindest eine der erfindungsgemäßen PTC-Heizeinrichtungen einschließt, an deren gegenüberliegenden Seitenflächen jeweils eine wärmeabgebende Lage anliegt.

Dabei betrifft die vorliegende Erfindung insbesondere eine PTC-Heizeinrichtung mit zumindest einem PTC-Element und Kontaktblechen, die zur Bestromung des PTC-Elements unterschiedlichen Polaritäten zuzuordnen sind und die gegen das PTC-Element elektrisch leitend angelegt sind.

Eine PTC-Heizeinrichtung und eine elektrische Heizvorrichtung der vorerwähnten Art sind beispielsweise aus EP 1 768 457 A1 bekannt.

Die EP 2 190 257 A1 offenbart eine PTC-Heizeinrichtung mit einem PTC-Element und Kontaktblechen, die jeweils unter Zwischenlage einer auf einer Breitseite des Kontaktblechs aufgebrachten elektrisch isolierenden Beschichtung wärmeleitend mit einem zugeordneten Wellrippenelement verbunden sind. Bei einer Variante, die als gattungsbildend angesehen wird, sind die Kontaktbleche unter Zwischenlage eines elektrisch isolierenden Kunststoffelementes wärmeleitend mit einem zugeordneten Wellrippenelement verbunden. Dieses Kunststoffelement ist durch Umspritzen des entsprechenden Kontaktbleches gebildet und umgreift das Kontaktblech randseitig. Einander gegenüberliegende Kunststoffelement lassen zwischen sich einen Spalt frei, durch den das PTC-Element gegenüber der Umgebung freiliegt.

Die EP 2 190 256 A1 offenbart eine PTC-Heizeinrichtung mit einem PTC-Element und beidseitig daran anliegenden Kontaktblechen, die jeweils unter Zwischenlage einer elektrisch isolierenden Schicht wärmeleitend mit einem zugeordneten Wellrippenelement verbunden sind. Ein Spalt zwischen den Wellrippenelementen ist vollständig mit einem ausgehärteten Kleber verfüllt. Der Kleber umgibt das PTC-Element außenseitig und siegelt auch das PTC-Element überragende Ende der Kontaktbleche ein.

Bei diesem Stand der Technik sind die Kontaktbleche, die zwischen sich die hintereinander vorgesehenen PTC-Elemente aufnehmen und unmittelbar kontaktieren, in einem sogenannten Positionsrahmen aufgenommen. Dieser Positionsrahmen überdeckt die PTC-Elemente und die Kontaktbleche höhenmäßig, d. h. quer zu einer Haupterstreckungsrichtung der Kontaktbleche beziehungsweise der PTC-Elemente. Die Haupterstreckungsrichtung liegt dabei in derjenigen Ebene, in der sich auch die größte Fläche des PTC-Elementes beziehungsweise der Kontaktfläche erstreckt. Mit dieser größten Fläche liegen die Kontaktbleche unmittelbar gegen das PTC-Element an. Das PTC-Element liegt mit seiner Hauptseitenfläche an den Kontaktblechen an. Die Hauptseitenfläche ist um ein Vielfaches größer als jede der Seitenflächen, die die Hauptseitenflächen des üblicherweise quaderförmig ausgebildeten PTC-Elementes miteinander verbinden.

Zur elektrischen Isolierung gegenüber der Umgebung schlägt der zuvor erwähnte Stand der Technik vor, an der den PTC-Elementen gegenüberliegenden Seite der Kontaktbleche Isolierlagen aus Keramik und/oder Kunststoff vorzusehen. Diese Isolierlagen überdecken jeweils die Außenflächen der beiden Kontaktbleche. Die Isolierlagen sind jeweils mit dem Positionsrahmen verbunden, beispielsweise über eine elastische Kleberaupe, die einerseits gegen eine sich parallel zu der Haupterstreckungsrichtung erstreckende Fläche des Positionsrahmens und andererseits gegen eine gegenüberliegend dazu vorgesehene Unterseite der Isolierlage anliegt.

Mit dieser Maßnahme wird verhindert, dass das mit der Heizvorrichtung zu erwärmende Fluid, welches bei dem vorerwähnten Stand der Technik Umgebungsluft ist, unmittelbar mit den Kontaktblechen beziehungsweise den PTC-Elementen in Berührung kommt. Denn nach dem zuvor erwähnten Stand der Technik werden die PTC-Elemente bevorzugt mit einem Hochvoltstrom beaufschlagt und dadurch erwärmt.

Die erfindungsgemäße Heizvorrichtung wie auch die Heizvorrichtung nach dem Stand der Technik kommt bevorzugt in einem Kraftfahrzeug zum Einsatz, besonders bevorzugt in einem elektrisch betriebenen Fahrzeug. Der Leistungsstrom zum Betrieb der einzelnen PTC-Heizeinrichtungen hat bei diesen Anwendungen eine weitaus höhere Spannung als die Bordnetzspannung bei einem konventionellen Fahrzeug.

Auch die vorliegende Erfindung hält an dem Konzept fest, Kontaktbleche als leitende Elemente zur Bestromung des PTC-Elementes vorzusehen. Diese Kontaktbleche haben den Vorteil, dass sie durch Stanzen und Biegen vorbereitet werden können und darüber hinaus einteilig auch Kontaktzungen ausbilden können, die dem elektrischen Anschluss der PTC-Heizeinrichtung an den Leistungsstrom dienen. So können die Kontaktbleche über den Rahmen der elektrischen Heizvorrichtung seitlich hinausgeführt sein, um dort üblicherweise männliche Kontaktelemente einer Steckverbindung auszubilden, die dem unmittelbaren Anschluss an eine in baulicher Einheit mit dem Rahmen verbundene Steuervorrichtung dienen kann. Eine solche Ausgestaltung hat den Vorteil, dass ein Leistungstransistor der Steuervorrichtung die beim Steuern erzeugte Verlustleistung an das zu erwärmende Fluid abgeben und somit die Wirksamkeit der elektrischen Heizvorrichtung erhöhen kann. Eine solche in baulicher Einheit vorgesehene Steuervorrichtung kann auch bei der vorliegenden Erfindung vorgesehen sein. Die Kontaktzungen können aber auch mit einem Stecker kontaktieren, der ein Kabel aufweist, welches die elektrische Heizvorrichtung mit dem Leistungsstrom oder einer externen Steuerung verbindet.

Wie der obige Stand der Technik belegt ist die elektrische Isolierung der einzelnen Kontaktbleche insbesondere bei Hochvoltanwendungen von Bedeutung. Denn von dem zu erwärmenden Fluid, beispielweise der Luft, mitgeschleppte Verunreinigungen oder Feuchtigkeit, gegebenenfalls auch Feuchtigkeit, die in dem HVAC entsteht, beispielsweise durch Leckage von Komponenten in dem HVAC, können zu einem Kurzschluss führen, wenn diese Feuchtigkeit oder Verunreinigung die Kontaktbleche unterschiedlicher Polarität berührt und damit den durch das PTC-Element gebildeten elektrischen Widerstand überbrückt.

Der vorliegenden Erfindung liegt das Problem zugrunde, eine PTC-Heizeinrichtung der vorerwähnten Art anzugeben, die mit verbesserter elektrischer Sicherheit betrieben werden kann.

Zur Lösung dieses Problems wird mit der vorliegenden Erfindung eine PTC-Heizeinrichtung mit den Merkmalen von Anspruch 1 vorgeschlagen.

Diese elektrische Heizeinrichtung hat in an sich bekannter Weise zumindest ein PTC-Element. Es können auch mehrere PTC-Elemente üblicherweise hintereinander, d. h. in Längserstreckungsrichtung der Kontaktbleche vorgesehen sein. Ein PTC-Element ist dabei üblicherweise ein keramischer Stein, der jedenfalls jenseits einer kritischen Temperatur PTC-Eigenschaften hat, so dass die maximale Leistungsaufnahme des PTC-Elementes und damit die maximale Erwärmung durch den üblicherweise jenseits der kritischen Temperatur stark steigenden Widerstand des PTC-Elementes begrenzt ist. Ein solches PTC-Element hat üblicherweise auf den sich gegenüberliegenden Kontaktflächen eine auf das keramische Material aufgebrachte, beispielsweise
aufgesputterte Metallisierung. Diese Metallisierung bildet üblicherweise die äußeren Hauptseitenflächen des PTC-Elementes aus. Über diese Metallisierung liegt das PTC-Element in der Regel unmittelbar an den Kontaktblechen an.

Die vorliegende Erfindung hält an dem Konzept der Kontaktbleche fest. Die Kontaktbleche sind üblicherweise durch längliche Streifen aus einem elektrisch leitenden Blechmaterial, wie beispielsweise Aluminium oder Kupfer oder Legierungen derselben gebildet. Soweit die Kontaktbleche durch längliche Kontaktstreifen gebildet sind, befinden sich üblicherweise mehrere PTC-Elemente in Längsrichtung des Kontaktbleches hintereinander auf dem Kontaktblech und sind mit diesem unmittelbar kontaktiert. Die PTC-Elemente haben dabei üblicherweise einen gewissen Abstand zueinander, so dass sich diese nicht gegenseitig zu stark erwärmen. Das Kontaktblech ist dabei üblicherweise nicht nur in Längsrichtung, sondern auch in Breitenrichtung breiter als das jeweilige PTC-Element. Die durch das Kontaktblech gebildete Auflagefläche zu dem PTC-Element wird dementsprechend randseitig zu dem PTC-Element noch von weiteren Flächenbereichen des Kontaktbleches überragt.

Die vorliegende Erfindung schlägt nun vor, die Kontaktbleche mit einem nicht-leitenden Überzug zu versehen. Dieser nicht-leitende Überzug umgibt das PTC-Element umfänglich, so dass in einer Querschnittsansicht lediglich die zuvor erwähnte Auflagefläche des Kontaktblechs für das PTC-Element innerhalb des Überzugs ausgespart ist. Dabei ist der elektrisch nicht-leitende Überzug so ausgebildet, dass das PTC-Element bis nahe an den Rand des Überzugs reicht beziehungsweise diesen Rand überragt.

Zur Vermeidung eines Kurzschlusses reicht es aus, dass lediglich eines der Kontaktbleche in dieser Weise ausgebildet ist. Das Kontaktblech der anderen Polarität kann in üblicher Weise frei liegen, d. h. ohne einen entsprechenden Überzug versehen sein.

Im Hinblick auf die Möglichkeit, dass zumindest ein Überzug während der Standzeit der PTC-Heizeinrichtung beschädigt wird oder altert, wird zur Erhöhung der elektrischen Sicherheit vorgeschlagen, vorzugsweise auch das andere der Kontaktbleche mit einem entsprechenden nicht-leitenden Überzug zu versehen.

Um zu verhindern, dass Verschmutzung oder Feuchtigkeit in einen Spalt zwischen dem PTC-Element und dem Kontaktblech gelangt, wird gemäß der vorliegenden Erfindung ein elektrisch isolierender Rahmen vorgeschlagen, durch den die Auflagefläche nach außen abgedichtet ist. Dieser Rahmen befindet sich zwischen dem PTC-Element und dem Kontaktblech und dem darauf vorgesehenen nicht-leitenden Überzug. Der Rahmen umgibt üblicherweise umfänglich das PTC-Element, erstreckt sich aber lediglich entlang einer randseitigen Kante am Übergang zwischen der Hauptseitenfläche des PTC-Elementes und den üblicherweise vier Stirnseitenflächen eines quaderförmigen PTC-Elementes, die den Umfang des PTC-Elementes definieren.

Der elektrisch isolierende Rahmen kann beispielsweise durch einen elektrisch isolierenden Klebstoff, beispielsweise einen Silikonkleber gebildet sein. Dieser Kleber kann mittels Siebdruck aufgetragen und somit mit guter Präzision an die Kontur der Auflagefläche angepasst werden. Durch den isolierenden Rahmen wird das PTC-Element gegenüber dem Überzug abgedichtet und das Eindringen von Flüssigkeit zwischen das PTC-Element und die Auflagefläche des Kontaktbleches verhindert.

Statt eines Klebstoffauftrags kann der Rahmen auch durch eine an dem Kontaktblech beziehungsweise dem elektrisch isolierenden Überzug anhaftende Folie, beispielsweise eine Laminierfolie, gebildet sein.

Gemäß einer bevorzugten Weiterbildung der vorliegenden Erfindung schlägt diese einen Kontaktvorsprung vor, der innerhalb einer die Auflagefläche freigebenden Öffnung des Überzugs vorgesehen ist. Dieser Kontaktvorsprung kann ganz oder teilweise durch eine Konturierung des PTC-Elementes und/oder ganz oder teilweise durch eine Konturierung auf oder durch das Kontaktblech gebildet sein. So ist es denkbar, die zuvor erwähnte Metallisierung an dem Randbereich des PTC-Elementes auszusparen, so dass die Metallisierung mehr oder weniger exakt auf die Auflagefläche passt, wohingegen ein gewisser Überhang des PTC-Elementes gebildet durch den keramischen Stein als solches über dem Überzug vorgesehen ist. Dabei kann der Kontaktvorsprung eine größere Höhe als die Dicke des Überzugs haben. Ein verbleibender Spalt zwischen der Oberfläche des Überzugs und der Unterseite des gegenüberliegend vorgesehenen Materials des PTC-Elementes kann durch den isolierenden Rahmen ausgefüllt sein. Der Kontaktvorsprung kann auch durch einen Materialauftrag auf der Metallisierung und/oder auf dem Kontaktblech gebildet sein. Es versteht sich, dass dieser Materialauftrag aus einem elektrisch leitenden Material erfolgt. Der Materialauftrag kann durch sputtern oder Siebdruck erfolgen. Diese Techniken werden insbesondere im Hinblick darauf angegeben, dass der Überzug nur eine sehr geringe Dicke von wenigen Mikrometern hat. Die Beschichtung kann eine Dicke von 20 bis 60 Mikrometer haben. Erfahrungsgemäß baut bei einer Schichtdicke von 30 Mikrometer lediglich ein Drittel davon auf der Grundfläche auf wohingegen etwa zwei Drittel dieser Schichtdicke in das Material des Substrates des eingeht.

Im Hinblick auf die Verwendung eines üblichen PTC-Elementes ohne gesonderte Anpassung ist es zu bevorzugen, den Kontaktvorsprung auf oder durch das Kontaktblech auszubilden.

So ist es insbesondere zu bevorzugen, den Kontaktvorsprung einteilig durch Umformen des Kontaktbleches an diesem und durch dieses einteilig auszuformen. Bei dieser Ausgestaltung ist das Kontaktblech auf der mit dem PTC-Element kontaktierten Hauptseitenfläche mit zumindest einer in der Regel planaren Erhöhung versehen, die die Auflagefläche ausbildet und gegen welche das PTC-Element unmittelbar angelegt ist. Die Grundfläche der Erhöhung ist dabei üblicherweise geringfügig kleiner als die Hauptseitenfläche des PTC-Elementes, so dass das PTC-Element die Erhöhung vollumfänglich überragt.

Die Erhöhung kann dabei durch Prägen der Randbereiche des Kontaktbleches erfolgen, wodurch die Wandstärke lediglich am Rand des Kontaktbleches reduziert wird, die der Auflagefläche gegenüberliegende Seitenfläche des Kontaktbleches allerdings plan bleibt, was im Hinblick auf eine flächige wärmeleitende Kontaktierung einer Wärme abgebenden Lage, beispielsweises eines aus einem mäandrierend gebogenen Blechstreifen gebildete Wellrippenelementes auf dieser Seite zu bevorzugen ist. Ebenso gut kann das Kontaktblech aber insgesamt verformt sein. Eine dadurch sich ergebende Erhöhung auf der einen Seite bewirkt eine muldenförmige Vertiefung auf der anderen Seite, die zum Einbringen von Kleber oder einer wärmeleitenden Passte genutzt werden kann, über welche die Wärme abgebenden Lage mit guter Leitfähigkeit mit dem entsprechenden Kontaktblech kontaktiert wird und die gleichfalls adhäsive Eigenschaften haben kann.

Im Hinblick auf eine deutlich verbesserte elektrische Isolation wird gemäß einer bevorzugten Weiterbildung der vorliegenden Erfindung vorgeschlagen, dass der Überzug das Kontaktblech umfänglich umgibt. In einer Querschnittansicht durch das Kontaktblech auf Höhe des PTC-Elementes ist dieser Überzug danach lediglich durch die entsprechende Auflagefläche durchbrochen. So liegt lediglich diejenige metallische Fläche des Kontaktbleches frei, die die Auflagefläche bildet. Bei einer Schnittansicht neben einem beziehungsweise zwischen zwei PTC-Elementen ist das Kontaktblech vollumfänglich von dem nicht-leitenden Überzug umgeben.

Gemäß einer bevorzugten Weiterbildung der vorliegenden Erfindung, nach der das Kontaktblech abgesehen von der wenigstens einen Auflagefläche und abgesehen von einem freien, eine Kontaktzunge bildenden Ende vollständig mit dem Überzug überzogen ist, ist auch eine Stirnseite des Kontaktblechs mit dem Überzug versehen. Lediglich das die Kontaktzunge ausbildende Ende überragt den Überzug endseitig. Dieses freie Ende kann isolierend und/oder abgedichtet in dem Rahmen der Heizvorrichtung aufgenommen sein, so dass das freie Ende nicht mit der Umgebung und dem zu erwärmenden Medium in Berührung kommt. Die Heizvorrichtung ist vorzugsweis eine Heizvorrichtung zum Erwärmen von Luft.

Der Überzug wird durch ein elektrisch nicht-leitendes Material gebildet, beispielsweise durch eine Beschichtung aus einer Keramik oder einer Beschichtung aus einem Kunststoff. Dabei erfolgt die Formgebung der Beschichtung bei dieser bevorzugten Ausgestaltung üblicherweise beim Auftragen des entsprechenden Materials. Kunststoff kann beispielsweise in flüssiger Form, beispielsweise in Form eines Kunststofflacks aufgetragen, beispielsweise aufgedruckt werden. Eine Beschichtung aus einer Keramik kann mittels PVD oder CVD aufgebracht werden. Denkbar ist beispielsweise eine Aluminiumoxid-Beschichtung (beispielweise Eloxal) beziehungsweise eine Beschichtung mit einem Kunststoff (z. B. Fluorpolymer).

Im Hinblick auf eine gute Haftung der vorliegenden Erfindung wird nach einer bevorzugten Weiterbildung vorgeschlagen, dass die Beschichtung adhäsive Eigenschaften hat und dass das PTC-Element durch die Beschichtung mit dem Kontaktblech verbunden ist. So kann das PTC-Element bei noch nicht ausgehärteter Beschichtung auf die Auflagefläche aufgesetzt und hierbei gleichzeitig ein randseitiger Kontakt des PTC-Elementes mit der Beschichtung erzeugt werden, durch welche der zuvor erwähnte elektrisch isolierende Rahmen außen um das PTC-Element herum gebildet wird. Dabei kann der Kontaktvorsprung mit einer geringeren Höhe als die Dicke der Beschichtung ausgebildet sein, so dass die Beschichtung beim Aufsetzen des PTC-Elementes teilweise verdrängt wird, um einen soliden siegelnden Rahmen außenumfänglich an dem PTC-Element vorzusehen.

Gemäß einer alternativen Ausgestaltung kann der isolierende Überzug durch eine elektrisch isolierende Folie gebildet sein. Diese Folie kann mit dem Kontaktblech verklebt sein. So kann die Folie eine selbstklebende Folie sein. Alternativ oder ergänzend kann die isolierende Folie auch auf das Kontaktblech aufgeschrumpft sein.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Seitenansicht eines Ausführungsbeispiels einer elektrischen Heizvorrichtung;
- Figur 2: eine Draufsicht auf eine PTC-Heizeinrichtung, die in der elektrischen Heizvorrichtung nach Figur 1 verbaut ist;
- Figur 3: eine Schnittansicht entlang der Linie III - III gemäß Figur 2;
- Figur 4: eine Schnittansicht entlang der Linie IV - IV gemäß Figur 2 nach dem Aufsetzen des weiteren Kontaktblechs und
- Figur 5: eine Schnittansicht gemäß Figur 3 für ein abgewandeltes Ausführungsbeispiel.

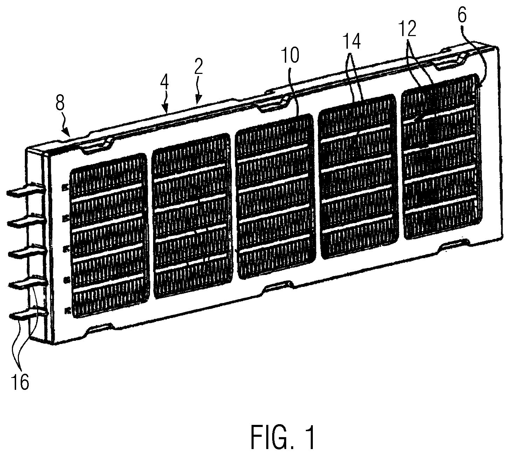

In Figur 1 kennzeichnet Bezugszeichen 2 eine elektrische Heizvorrichtung, die einen Rahmen 4 hat. Dieser Rahmen 4 bildet parallel zueinander vorgesehene und einander gegenüberliegende Ein- und Auslassöffnungen 6; 8. Innerhalb der in Figur 1 vorne zu erkennenden Einlassöffnung 6 ist ein Heizblock 10 zu sehen, der aus einer Schichtung besteht, die mehrerer PTC-Heizeinrichtungen 12 und jeweils parallel dazu vorgesehene und unmittelbar an den PTC-Heizeinrichtungen 12 anliegende Wärme abgebende Lagen 14 umfasst. Die Wärme abgebenden Lagen 14 bestehen jeweils aus einem mäandrierend gebogenem Blech und können unmittelbar oder unter Zwischenlage einer elektrischen Isolierung gegen die PTC-Heizeinrichtung 12 anliegen. In dem Rahmen 4 kann ferner zumindest eine Federeinrichtung vorgesehen sein, die die einzelnen Lagen 14 des Heizblocks 10 gegeneinander angelegt hält, so dass eine gute Wärmeauskopplung von der PTC-Heizeinrichtung 12 auf die Wärme abgebende Lage 14 möglich ist und auch ansonsten die Lagen 14 des Heizblocks fest gegeneinander angelegt werden. Der Heizblock wird innerhalb des aus Kunststoff gebildeten Rahmens 4 isolierend abgestützt. Lediglich mit Bezugszeichen 16 gekennzeichnete Kontaktzungen ragen stirnseitig über den Rahmen 4 hinaus.

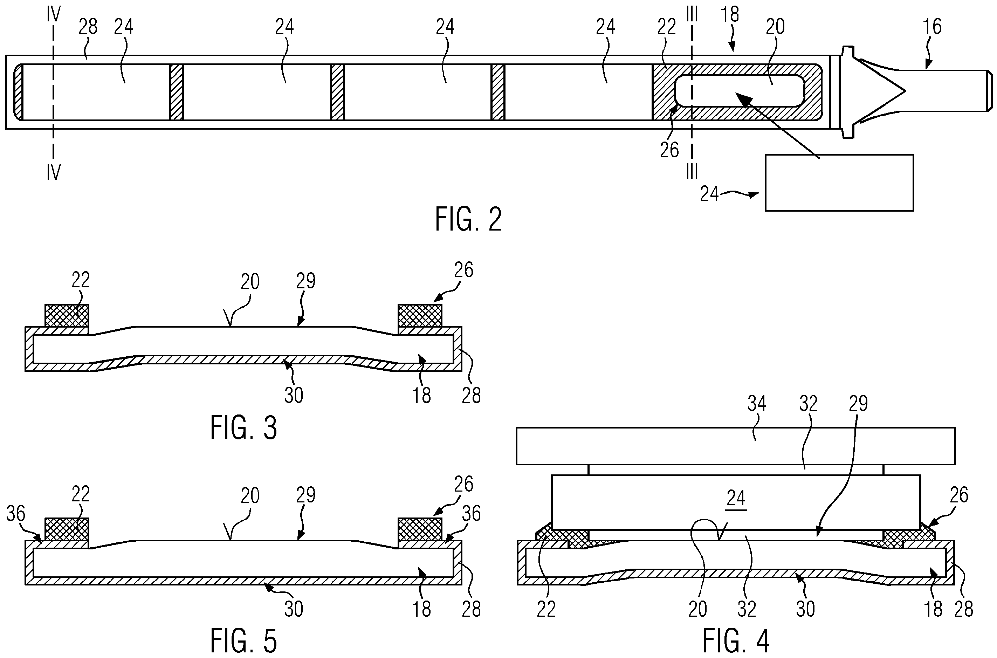

Wie Figur 2 erkennen lässt, werden diese Kontaktzungen 16 durch ein metallisches längliches Kontaktblech 18 gebildet, und zwar an einem freien Ende des entsprechenden Kontaktblechs 18. Auf der Hauptseitenfläche des Kontaktblechs 18, auf welche Figur 2 schaut, sind mehrere Auflageflächen 20 durch das Kontaktblech 18 selbst und innerhalb eines Auftrags aus Klebstoff 22 gebildet. Die Auflageflächen 20 werden mit PTC-Elementen 24 belegt, was in der Darstellung nach Figur 2 bereits an vier Auflageflächen 20 erfolgt ist. Lediglich die benachbart zu der Kontaktzunge 16 vorgesehene Auflagefläche 20 ist noch nicht mit zugeordneten dem PTC-Element 24 belegt. Ersichtlich bildet der Klebstoff 22 einen Rahmen, der nachfolgend als Kleberrahmen 26 bezeichnet wird und der die Auflagefläche 20 vollumfänglich umgibt und somit eine Öffnung ausformt, die diese die Auflagefläche 20 frei lässt.

Außerhalb des Klebstoffs 22 ist ein umlaufender Rand zu erkennen, der durch einen elektrisch nicht-leitenden Überzug 28 gebildet ist. Dieser Überzug 28 umgibt das metallische Material des Kontaktblechs 18 nahezu vollständig. Lediglich die Kontaktzunge 16 und an einer Hauptseitenfläche des Kontaktblechs 18 die Auflageflächen 20 sind von dem nicht-leitenden Überzug 28 ausgespart.

Wie Figur 3 verdeutlicht, befindet sich der Klebstoff 22 teilweise innerhalb eines die Auflagefläche 20 umgebenden Randes des Überzugs 28. So wird beim nachfolgenden Auftrag des PTC-Elementes 24 sichergestellt, dass jedenfalls die Auflagefläche 20 gegenüber der Umgebung abgedichtet ist, d. h. sich der Kleberrahmen 26 jedenfalls auch unterhalb des PTC-Elementes 24 und bis über den Rand des Überzuges 28 hin erstreckt, der die Auflagefläche 20 umfänglich umgibt. Der Klebstoff 22 kann beispielsweise ein Silikon-Klebstoff sein, der beispielsweise mittels Siebdruck unter Auslassung der Auflageflächen 20 auf das Kontaktblech 18 aufgebracht wird. Wie Figur 3 verdeutlicht, wird die Auflagefläche 20 an einem Kontaktvorsprung 29 ausgebildet, der durch eine rückseitige Prägung 30 des Kontaktblechs 18 gebildet ist. So liegt die Auflagefläche 20 oberhalb einer Ebene, die durch das unbearbeitete Kontaktblech 18 definiert ist. Die Auflagefläche 20 liegt auch oberhalb eines Niveaus, welches durch die Oberseite bzw. Außenfläche des Überzugs 28 definiert ist. So wird die flächige und elektrisch kontaktierende Anlage des PTC-Elementes 24 gegen die Auflagefläche 20 nicht durch das Material des Überzugs 28 behindert.

Das PTC-Element 24 wird unter Druck gegen den noch fließfähigen Klebstoff 22 angelegt, der hierbei teilweise verdrängt wird. Jedenfalls eine Hauptseitenfläche des PTC-Elementes 24, die eine in Figur 4 mit Bezugszeichen 32 gekennzeichnete Metallisierung trägt, wird unmittelbar metallisch und elektrisch leitend mit dem Kontaktblech 18 kontaktiert, und zwar über die Auflagefläche 20.

Figur 4 verdeutlicht auch schematisch das Ergebnis des Verdrängens des Klebstoffs 22 durch das gegen das Kontaktblech 18 unter Druck angelegte PTC-Element 24.

Auf der gegenüberliegenden Seite befindet sich ein weiteres Kontaktblech 34, welches in konventioneller Weise gegen dort vorgesehene Metallisierung 32 angelegt ist. Dieses Kontaktblech 34 kann über einen elektrisch leitenden Kleber mit dem PTC-Element 24 verklebt und/oder aber durch die zuvor erwähnte Feder innerhalb des Rahmens 4 gegen das PTC-Element 24 elektrisch und wärmeleitend angelegt sein.

Die Figur 5 verdeutlicht eine gegenüber Figur 3 abgewandelte Ausgestaltung. Bei dieser ist die Erhöhung zur Ausbildung der Anlagefläche 20 durch Prägen der Randbereiche hergestellt. Die geprägten und in der Dicke reduzierten Randbereiche sind mit Bezugszeichen 36 gekennzeichnet. Durch das Prägen wird das Kontaktblech 18 auf der zur elektrischen Kontaktierung vorgesehenen Seite konturiert. Die dem Kontaktvorsprung 29 gegenüberliegende Seitenfläche des Kontaktblechs 18 bleibt allerdings plan, was im Hinblick auf eine flächige Kontaktierung der Wärme abgebenden Lage 14 zu bevorzugen ist.

### Bezugszeichenliste

- 2: Elektrische Heizvorrichtung
- 4: Rahmen
- 6: Einlassöffnung
- 8: Auslassöffnung
- 10: Heizblockw
- 12: PTC-Heizeinrichtung
- 14: Wärme abgebende Lage
- 16: Kontaktzunge
- 18: Kontaktblech
- 20: Auflagefläche
- 22: Klebstoff
- 24: PTC-Element
- 26: Kleberrahmen
- 28: Überzug
- 29: Kontaktvorsprung
- 30: rückseitige Prägung
- 32: Metallisierung
- 34: weiteres Kontaktblech
- 36: geprägter Randbereich

## Patentansprüche

1. PTC-Heizeinrichtung (12) mit zumindest einem PTC-Element (24) und Kontaktblechen (18; 34), die zur Bestromung des PTC-Elements (24) unterschiedlichen elektrischen Polaritäten zuzuordnen und die gegen das PTC-Element (24) elektrisch leitend angelegt sind, wobei zumindest eines der Kontaktbleche (18) mit einem elektrisch nicht-leitenden Überzug (28) versehen ist, der das PTC-Element (24) so umgibt, dass eine durch das Kontaktblech (18) gebildete Auflagefläche (20) für das PTC-Element (24) innerhalb des Überzugs (28) ausgespart ist, **dadurch gekennzeichnet, dass** zwischen dem PTC-Element (24) und dem Kontaktblech (18) und dem darauf vorgesehenen nicht-leitenden Überzug (28) ein elektrisch isolierender Rahmen (26) vorgesehen ist, durch den die Auflagefläche (20) nach außen abgedichtet ist.

2. PTC-Heizeinrichtung (12) nach Anspruch 1, **dadurch gekennzeichnet, dass** die unterschiedlichen elektrischen Polaritäten zugeordneten Kontaktbleche (18; 34) jeweils mit einem elektrisch nicht-leitenden Überzug (28) versehen sind, der das PTC-Element (24) umfänglich umgibt, so dass an jedem der Kontaktbleche (18; 34) lediglich eine durch das jeweilige Kontaktblech (18; 34) gebildete Auflagefläche (20) für das PTC-Element (24) innerhalb des Überzugs (28) ausgespart ist.

3. PTC-Heizeinrichtung (12) nach einem der vorherigen Ansprüche **gekennzeichnet durch** einen die Dicke des Überzugs (28) kompensierenden Kontaktvorsprung (29), der innerhalb einer die Auflagefläche (20) freigebenden Öffnung des Überzugs (28) vorgesehen ist.

4. PTC-Heizeinrichtung (12) nach Anspruch 3, **dadurch gekennzeichnet, dass** der Kontaktvorsprung (29) an dem Kontaktblech (18) einteilig durch Umformen des Kontaktblechs (18) ausgeformt ist.

5. PTC-Heizeinrichtung (12) nach einem der vorherigen Ansprüche, **dadurch gekennzeichnet, dass** der Überzug (28) das Kontaktblech (18) umfänglich umgibt.

6. PTC-Heizeinrichtung (12) nach einem der vorherigen Ansprüche, **dadurch gekennzeichnet, dass** das Kontaktblech (18) abgesehen von der wenigstens einen Auflagefläche (20) und abgesehen von dem freien, eine Kontaktzunge (16) bildenden Ende vollständig mit dem Überzug (28) überzogen ist.

7. PTC-Heizeinrichtung (12) nach einem der vorherigen Ansprüche, **dadurch gekennzeichnet, dass** der Überzug (28) durch eine Beschichtung aus einer Keramik oder einem Kunststoff gebildet ist.

8. PTC-Heizeinrichtung (12) nach Anspruch 7, **dadurch gekennzeichnet, dass** die Beschichtung adhäsive Eigenschaften hat und dass das PTC-Element (24) durch die Beschichtung mit dem Kontaktblech (18) verbunden ist.

9. PTC-Heizeinrichtung (12) nach einem der vorherigen Ansprüche, **dadurch gekennzeichnet, dass** der Überzug (28) durch eine elektrisch isolierende Folie gebildet ist.

10. PTC-Heizeinrichtung (12) nach Anspruch 9, **dadurch gekennzeichnet, dass** die isolierende Folie mit dem Kontaktblech (18) verklebt ist.

11. PTC-Heizeinrichtung (12) nach einem der Ansprüche 9 oder 10, **dadurch gekennzeichnet, dass** die isolierende Folie auf das Kontaktblech (18) aufgeschrumpft ist.

12. Elektrische Heizvorrichtung (2) mit einem Rahmen (4), der Ein- und Auslassöffnungen (6; 8) für ein zu erwärmendes Fluid ausbildet und zumindest eine PTC-Heizeinrichtung (12) nach einem der Ansprüche 1 bis 11 einschließt, an deren gegenüberliegenden Seitenflächen jeweils eine Wärme abgebende Lage (14) anliegt.

## Claims

1. A PTC heating device (12) comprising at least one PTC element (24) and contact plates (18; 34) to be assigned different electric polarities for energizing the PTC element (24) and abutting against the PTC element (24) in an electrically conducting manner., wherein at least one of the contact plates (18) is provided with an electrically non-conducting coating (28) enclosing the PTC element (24) such that a bearing surface (20) formed by the contact plate (18) for the PTC element (24) is left free within the coating (28) **characterized in that** between the PTC element (24) and the contact plate (18) and the non-conducting coating (28) provided thereon an electrically insulating frame (26) is provided sealing the bearing surface (20) against the outside.

2. The PTC heating device (12) according to claim 1, **characterized in that** the contact plates (18, 34) assigned to the different electric polarities are each provided with an electrically non-conducting coating (28) circumferentially enclosing the PTC element (24) so that at each of the contact plates (18; 34) merely one bearing surface (20) formed by the respective contact plate (18; 34) for the PTC element (24) is exposed within the coating (28).

3. The PTC heating device (12) according to any one of the preceding claims **characterized by** a contact protrusion (29) compensating for the thickness of the coating (28) provided within an opening of the coating (28) exposing the bearing surface (20).

4. The PTC heating device (12) according to claim 3, **characterized in that** the contact protrusion (29) is formed integrally on the contact plate (18) by forming the contact plate (18).

5. The PTC heating device (12) according to anyone of the preceding claims, **characterized in that** the coating (28) encloses the contact plate (18) along the circumference thereof.

6. The PTC heating device (12) according to anyone of the preceding claims, **characterized in that** the contact plate (18) is completely covered by the coating (28) except for the at least one bearing surface (20) and the free end forming a contact tab (16).

7. The PTC heating device (12) according to anyone of the preceding claims, **characterized in that** the coating (28) is formed by a coat made of ceramic or plastic.

8. The PTC heating device (12) according to claim 7, **characterized in that** the coat has adhesive properties and **in that** the PTC element (24) is joined to the contact plate (18) by means of the coat.

9. The PTC heating device (12) according to anyone of the preceding claims, **characterized in that** the coating (28) is formed by an electrically insulating film.

10. The PTC heating device (12) according to claim 9, **characterized in that** the insulating film is glued to the contact plate (18).

11. The PTC heating device (12) according to anyone of claims 9 or 10, **characterized in that** the insulating film is shrunk onto the contact plate (18).

12. An electric heating device (2) comprising a frame (4) forming inlet and outlet openings (6; 8) for a fluid to be heated and including at least one PTC heating device (12) according to anyone of claims 1 to 11, wherein on each of the opposing side faces thereof a respective heat emitting layer (14) is applied all.

## Revendications

1. Dispositif de chauffage (12) à thermistance à coefficient de température positif, CTP, avec au moins un élément CTP (24) et des tôles de contact (18 ; 34) qui sont associées à des polarités électriques différentes pour alimenter l'élément CTP (24) et qui sont électroconductrices vis-à-vis de l'élément CTP (24), dans lequel au moins l'une des tôles de contact (18) est pourvue d'un revêtement non électroconducteur (28) qui entoure l'élément CTP (24) de telle sorte qu'une surface d'appui (20) formée par la tôle de contact (18) pour l'élément CTP (24) soit aménagée dans le revêtement (28), **caractérisé en ce qu'**un encadrement électro-isolant (26) est pourvu entre l'élément CTP (24) d'une part et la tôle de contact (18) et son revêtement non conducteur (28) d'autre part, qui assure une étanchéité entre la surface d'appui (20) et l'extérieur.

2. Dispositif de chauffage CTP (12) selon la revendication 1, **caractérisé en ce que** les tôles de contact (18 ; 34) associées aux différentes polarités électriques sont pourvues chacune d'un revêtement non électroconducteur (28) qui entoure complètement l'élément CTP (24) de sorte que, sur chacune des tôles de contact (18 ; 34), une seule surface d'appui (20) formée par la tôle de contact respective (18 ; 34) pour l'élément CTP (24) est aménagée dans le revêtement (28).

3. Dispositif de chauffage CTP (12) selon l'une des revendications précédentes, **caractérisé par** une protubérance de contact (29) compensant l'épaisseur du revêtement (28), qui est pourvue dans une ouverture du revêtement (28) exposant la surface d'appui (20).

4. Dispositif de chauffage CTP (12) selon la revendication 3, **caractérisé en ce que** la protubérance de contact (29) présente sur la tôle de contact (18) est formée en une seule pièce par le formage de la tôle de contact (18).

5. Dispositif de chauffage CTP (12) selon l'une des revendications précédentes, **caractérisé en ce que** le revêtement (28) entoure complètement la tôle de contact (18).

6. Dispositif de chauffage CTP (12) selon l'une des revendications précédentes, **caractérisé en ce que** la tôle de contact (18) est entièrement recouverte par le revêtement (28), à l'exception de ladite au moins une surface d'appui (20) et de l'extrémité libre formant une languette de contact (16).

7. Dispositif de chauffage CTP (12) selon l'une des revendications précédentes, **caractérisé en ce que** le revêtement (28) est constitué par un revêtement en céramique ou en plastique.

8. Dispositif de chauffage CTP (12) selon la revendication 7, **caractérisé en ce que** le revêtement possède des propriétés adhésives et que l'élément CTP (24) est connecté à la tôle de contact (18) par le revêtement.

9. Dispositif de chauffage CTP (12) selon l'une des revendications précédentes, **caractérisé en ce que** le revêtement (28) est constitué par un film électro-isolant.

10. Dispositif de chauffage CTP (12) selon la revendication 9, **caractérisé en ce que** le film isolant est collé à la tôle de contact (18).

11. Dispositif de chauffage CTP (12) selon l'une des revendications 9 et 10, **caractérisé en ce que** le film isolant est rétracté sur la tôle de contact (18).

12. Dispositif de chauffage électrique (2) avec un encadrement (4) formant des ouvertures d'entrée et de sortie (6 ; 8) pour un fluide à chauffer, et comprenant au moins un dispositif de chauffage CTP (12) selon l'une des revendications 1 à 11 dont les surfaces latérales opposées comportent chacune une couche émettrice de chaleur (14).
